# EUROPÄISCHE PATENTSCHRIFT

(11) **EP 2 346 128 B1**
(45) Veröffentlichungstag und Bekanntmachung des Hinweises auf die Patenterteilung: **21.11.2012**
(21) Anmeldenummer: 10194252.2
(22) Anmeldetag: 09.12.2010
(51) Int. Cl.: H02B 13/035

(54) **Gasisolierter Sensormodul**
Gas-insulated sensor module
Module de capteur isolé du gaz

(30) Priorität: 18.01.2010 EP 10150989
(43) Veröffentlichungstag der Anmeldung: 20.07.2011
(73) Patentinhaber: ABB Technology AG, 8050 Zürich (CH)
(72) Erfinder: Brandl, Florian, 8052, Zürich (CH); Saxl, David, CH-8046, Zürich (CH)
(74) Vertreter: ABB Patent Attorneys

(56) Entgegenhaltungen:
- EP-A1- 0 755 062
- EP-A1- 0 780 941

## Beschreibung

### TECHNISCHES GEBIET

Die vorliegende Erfindung betrifft einen Baustein einer gasisolierten Hochspannungs-Schaltanlage, auch GIS genannt, insbesondere einen gasisolierten Hochspannungswandler. Solche gattungsgemässen Hochspannungsmodule dienen zur Erfassung von Spannungen an Primärleitern in einer GIS-Schaltanlage.

### TECHNOLOGISCHER HINTERGRUND UND STAND DER TECHNIK

Bei typischen GIS-Schaltanlagen werden die Spannungen der Phasenleiter, welche auf unterschiedlichen elektrischen Potentialen liegen, typischerweise in einem gasisolierten Hochspannungssensor, nachstehend auch Spannungswandler genannt, für alle Phasen gemeinsam oder in jeweils einem gasisolierten Hochspannungswandler pro Phase separat ermittelt. Einer gewissen Modularität der GIS-Schaltanlage folgend, weisen die Phasenleiter im Bereich der Hochspannungssensoren in Querrichtung zur Leiterachse verlaufende Leiterstummel auf, die in einem Anschlussbereich beim Anschlussflansch des entsprechenden gekapselten Gehäuses der GIS-Schaltanlage münden. Bei solchen GIS-Schaltanlagen weist die Spannungsmessungseinheit mit dem mindestens einen Spannungswandler typischerweise drei sich parallel zueinander erstreckende Primärphasenanschlüsse auf, welche jeweils mit einem Spannungstransformator zum Messen der jeweiligen Primärspannung verbunden sind. Die Primärphasenanschlüsse werden bei der Montage der Spannungsmessungseinheit an den Anschlussbereich der Leiterstummel angeschlossen. Anschliessend wird das metallgekapselte Gehäuse der Spannungsmessungseinheit mit Isoliergas, beispielsweise Schwefelhexafluorid gefüllt.

Ein solcher Hochspannungswandler ist aus der Druckschrift EP0755062 bekannt.

Bei einem ersten Typ der Spannungsmessungseinheit sind sowohl die drei Primärphasenanschlüsse, wie auch die eigentliche entsprechende Messeinheit pro Phase gemeinsam in einem Gasraum gekapselt. Dabei sind die drei parallel zueinander ausgerichteten Primärphasenanschlüsse in einem gleichschenkligen Dreieck zueinander angeordnet, um eine optimale Anschlussgeometrie zu realisieren. Ein Vertreter des ersten Typs ist beispielsweise in der EP 0603619 A1 offenbart.

Bei einem zweiten Typ der Spannungsmessungseinheit ist jeder Primärphasenanschluss, wie auch die eigentliche entsprechende Messeinheit für jede Phase in einem separaten Gasraum gekapselt. Bei einer solchen dreiphasigen Spannungsmessungseinheit sind daher typischerweise drei baugleiche Spannungswandler eingesetzt.

Aufgrund der zunehmenden Nachfrage nach kleineren, aber dennoch leistungsfähigen GIS für Mittel- und Hochspannungsanlagen, kommt der Kompaktheit einer GIS eine entscheidende Bedeutung zu.

Wenn von einer GIS beispielsweise höhere elektrische Leistungen bei gleichbleibendem Schutzgas und gleichbleibendem Funktionsaufbau und gleichbleibenden Materialien gefordert werden, wirkt sich das in der Regel negativ auf die Abmessungen der GIS aus, da die GIS aufgrund vergrösserter Gehäusedurchmesser beziehungsweise Abmessungen weniger Kompakt realisiert werden kann.

### ZUSAMMENFASSUNG DER ERFINDUNG

Es ist eine Aufgabe der vorliegenden Erfindung, einen GIS-Sensormodul, etwa in Form eines gasisolierten Hochspannungswandlers vorzulegen, welcher eine kompaktere Bauweise eines Schaltfeldes ermöglicht.

Diese Aufgabe wird mit dem Gegenstand nach Anspruch 1 gelöst. In einer Basisausführungsform weist die gasisolierte Hochspannungsmessungseinheit mindestens zwei parallel zueinander verlaufend angeordnete Primärphasenanschlüsse auf, welche mit mindestens einer damit verbundenen Messeinheit zum Messen einer Primärspannung der Primärphasenanschlüsse verbunden ist. Die Primärphasenanschlüsse und die Messeinheiten sind gekapselt in einem Gehäuse der Hochspannungsmessungseinheit angeordnet. Das Gehäuse der erfindungsgemässen Hochspannungsmesseinheit weist pro Primärphasenanschluss jeweils eine separate gehäuseseitige Anschlussöffnung auf, welche den jeweiligen Primärphasenanschluss umgreift und, je nach Ausführungsform, beispielsweise in einen flanschartigen Adapterabschnitt des Gehäuses mündet. Die mindestens zwei Primärphasenanschlüsse sind derart in einer gemeinsamen Ebene angeordnet, dass das Gehäuse in einer senkrecht zu dieser Ebene verlaufenden Schnittebene einen langgezogenen Gehäusequerschnitt aufweist, dessen Länge (Gehäuselänge) grösser als dessen Breite (Gehäusebreite) ist. Die Primärphasenanschlüsse und die Messeinheiten sind in einem Gasraum des Gehäuses gemeinsam gekapselt angeordnet.

Im Fall einer Ausführungsform als dreiphasige Hochspannungsmesseinheit sind die Primärteile im Gasraum dadurch dreiphasig gekapselt und über die Steckverbindung jeweils einphasig aus der Hochspannungsmesseinheit herausgeführt. In jedem Fall dient je eine gehäuseseitige Anschlussöffnung zur separaten Aufnahme von einem einzigen Primärphasenanschluss. Unter dem Begriff 'einphasiger Isolator' wird ein elektrischer Isolator verstanden wird, durch welchen lediglich ein Nominalleiter (eine Primärphase) geführt ist.

Der gemeinsame Gasraum der Hochspannungsmesseinheit ist gegen einen beispielsweise flanschartig ausgeführten Adapterabschnitt hin durch Gehäuserippen in der Art und Weise von drei einphasig gekapselten Primärphasenanschlüssen gestaltet, wobei die dadurch entstandenen Gasräume auf einer dem flanschartigen Adapterabschnitt abgewandten Ende der Hochspannungsmesseinheit hydraulisch in einen einzigen Gasraum münden. Der flanschartige Adapterabschnitt dient beispielweise als mechanische Kontaktfläche für die mechanische Befestigung mit einem Anschlussmodul.

Diese Basisausführungsform weist im Vergleich zu einer Mehrphasigen oder mehreren einphasigen Hochspannungsmesseinheiten gleich mehrere Vorteile auf. Erstens erfordert die Hochspannungsmesseinheit aufgrund der mehrphasigen Kapselung der Primärphasenanschlüsse lediglich eine einzige Befüllung mit Isoliergas. Eine Teilbefüllung oder Füllung mit anderem Gas wie etwa Kohlendioxid für Transport der Hochspannungsmesseinheit an ihren Bestimmungsort, etwa einer Unterstation, ist dadurch nicht mehr notwendig. Ein zweiter Vorteil liegt darin, dass die Hochspannungsmesseinheit bereits komplett vormontierbar als Vormontageeinheit prüfbar ist, da die gasdichte Isolation der Hochspannungsmesseinheit vor der Inbetriebsetzungsphase vollständig realisierbar ist. Dies ist wünschenswert, denn oft werden Hochspannungsmesseinheiten/Spannungswandler örtlich an anderem Ort, beispielsweise durch Zulieferer oder Dritte fernab vom Herstellungsort eines klassischen GIS-Schaltfeldes gefertigt. Der Spannungswandler trifft typischerweise bei der Montage auf das Schaltfeld zum ersten Mal auf seinen konkreten Einsatzort.

Zweitens erfordert die erfindungsgemässe Hochspannungsmesseinheit im Betrieb lediglich eine einzige Überwachung des Schutzgases/Isoliergases im gemeinsamen Gasraum der Hochspannungsmesseinheit. Drittens ist auch nur eine einzige Überdruckschutzmechanik, beispielsweise in Form einer Berstscheibe, erforderlich. Viertens ermöglicht die mehrphasige Kapselung der Primärphasenanschlüsse eine distanzmässig verhältnismässig nahe Anordnung zweier benachbarter Primärphasenanschlüsse unterschiedlichen elektrischen Potentials. Dies ermöglicht nicht zuletzt eine Verbesserung des Freiheitsgrades für die Konstruktion der Hochspannungsmesseinheit. Fünftens ermöglicht die gemeinsame Anordnung der Primärphasenanschlüsse in einem gemeinsamen Gasraum eine Optimierung der Masse des Gehäuses der Hochspannungsmesseinheit.

Wenn der Gasraum der Hochspannungsmesseinheit als Druckbehälter ausgelegt ist, welcher für einen Betrieb bei einem Nominaldruck von mindestens 2.5 bar (250000 Pa) im jeweiligen Gasraum ausgelegt sind, ist damit ein GIS-Hochspannungsmodul realisierbar. Im Betrieb ist die Hochspannungsmesseinheit in der Folge mit einem unter Druck stehenden Isoliergas wie etwa Schwefelhexafluorid oder dergleichen gefüllt, welches je nach beabsichtigten Spannungslevel beispielsweise unter 2, 6 oder mehr bar Druck steht.

In einer Ausführungsform, in welcher das Gehäuse zwei sich in Richtung der Länge erstreckende, einander gegenüberliegend angeordnete Gehäuseflanken aufweist, weist mindestens eine der Gehäuseflanken mindestens eine dem Absolutdruck entgegenwirkende Struktur auf. Darunter wird eine Struktur verstanden, welche der Gehäuseflanke beziehungsweise den Gehäuseflanken des Gehäuses genügend Festigkeit verleiht, um im Betrieb der Hochspannungsmesseinheit dem oben genannten Gasdruck zuverlässig zu widerstehen. Die Struktur dient also im Vergleich zu einer Gehäuseflanke ohne die erfindungsgemässe Struktur zur Erhöhung der Festigkeit und/oder Formstabilität der Gehäuseflanke durch die Struktur. Anders ausgedrückt weist eine der Gehäuseflanken mindestens eine dem Absolutdruck entgegenwirkende Struktur auf, um im Betrieb der Hochspannungsmessungseinheit einem Absolutdruck im Gasraum entgegenzuwirken. Unter Absolutdruck wird die Druckdifferenz zwischen dem Druck/Gasdruck innerhalb des Gasraums und ausserhalb des Gasraums verstanden. Je nach Gegebenheiten und Ausführungsform umfasst diese Struktur mindestens ein sich in Richtung der Primäranschlüsse erstreckendes Strukturelement, etwa in Form einer Rippe des Gehäuses. Wenn das Gehäuse durch Giessen hergestellt wird, lassen sich Rippen typischerweise wirtschaftlich herstellen. Ein durch Giessen hergestelltes Gehäuse ist in einer bevorzugten Ausführungsform der Hochspannungsmesseinheit ein- oder zweiteilig.

Bei einer Ausführungsform einer Struktur, etwa einer Rippe, ist diese durch mindestens eine dem Absolutdruck im Gasraum entgegenwirkende Struktur durch eine lokale Einbuchtung des Gehäuses gebildet. Je nach Randbedingungen erfolgt die lokale Einbuchtung des Gehäuses durch einen Einzug der Breite und/oder der Länge des Gehäuses.

Alternativ oder ergänzend dazu ragt die mindestens eine Struktur ins Innere des Gehäuses hinein. Eine derartige Ausführungsform ist beispielsweise dann vorteilhaft, wenn vorstehende Teile vermieden werden sollen oder wenn die Struktur vor äusseren Beschädigungen geschützt sein soll.

Selbst bei im Gehäusequerschnitt gesehen langen und dünnen Wänden des Gehäuses sind gute Festigkeitswerte des Gehäuses erzielbar, wenn das Gehäuse in mindestens einem Abschnitt des primärseitigen Anschlussbereichs zwischen den Primärphasenanschlüssen verrippt ist. Dies gilt insbesondere dann, wenn die beiden Gehäuseflanken im Abschnitt des primärseitigen Anschlussbereichs über mindestens eine Rippe miteinander verbunden sind.

Ein besonders geringes Gasvolumen lässt sich mit Hochspannungsmessungseinheiten erreichen, bei denen die Primärphasenanschlüsse und/oder die Messeinheiten formmässig ineinander verzahnt angeordnet sind. Unter dem Begriff 'formmässig ineinander verzahnt' wird eine geometrische Orientierung bzw. Ausrichtung der Primärphasenanschlüsse und/oder die Messeinheiten relativ zueinander verstanden. Bei einer Ausführungsform der Messeinheiten als Spannungswandler mit je einem Eisenkern und einer Wicklungspackung weist die Messeinheit in Richtung des Primärphasenanschlusses gesehen einen kreuzförmigen Querschnitt im Bereich der Messeinheit auf. Eine Ineinanderverzahnung zweier benachbarter Messeinheiten ist durch eine Drehung der Messeinheiten um die jeweilige Längsachse der Primärphasenanschlüsse um einen Neigungswinkel und ein anschliessendes Gegeneinanderschieben in Richtung der Gehäuselänge erzielbar. Als Folge davon greifen konvexe Abschnitte der einen Messeinheit in konkave Abschnitte der benachbarten Messeinheit, wodurch der Abstand der zwei Messeinheiten und Primärphasenanschlüsse verringerbar ist. Letzteres erträgt positiv zur Volumenreduktion des Gasraums bei. Als Beispiel von formmässig ineinander verzahnt angeordneten Primärphasenanschlüsse seien an dieser Stelle zwei benachbarte Primärphasenanschlüsse mit je einem U-förmigen Querschnitt genannt, wobei ein Schenkel des ersten Primärphasenanschlusses zwischen den zwei Schenkeln des zweiten Primärphasenanschlusses angeordnet ist.

Eine weitere Verringerung des Gasvolumens ist erzielbar, wenn der Gehäusequerschnitt in Richtung der Gehäuselänge und/oder in Richtung der Primärphasenanschlüsse zumindest abschnittweise einer gemeinsamen Umhüllenden der Messeinheiten und/oder der Primärphasenanschlüsse folgt.

In einer besonders montagefreundlichen Ausführungsform der erfindungsgemässen Hochspannungsmessungseinheit ist zumindest einer der Primäranschlüsse im primärseitigen Anschlussbereich mit einer Trockensteckkontaktkupplung verbunden. Besonders vorteilhaft ist es, wenn alle Primärphasenanschlüsse über eine Steckkontaktkupplung, etwa in Form einer Trockensteckkontaktkupplung verbunden sind.

Wenn die Steckverbindung als Trockensteckverbindung ausgebildet ist, ermöglicht dies ein Anschliessen der Hochspannungsmesseinheit an den benachbarten Modul (Anschlussmodul), ohne dass eine Isoliergasmanipulation wie etwa ein Evakuieren des Gasvolumens der Hochspannungsmesseinheit oder des benachbarten Moduls erforderlich ist. In der Folge ermöglich diese Ausführungsform einen wirtschaftlichen Reparatur- und (Wieder-) Inbetriebsetzungsprozess. Unter dem Begriff Trockensteckverbindung wird eine elektrisch isolierende Steckverbindung verstanden, welche eine Hochspannungsisolation an der Umgebungsluft ermöglicht. Dabei ist der Primäranschlusskontakt beziehungsweise Kontaktanschluss der Trockensteckverbindung elektrisch gegenüber typischerweise auf Erdpotential befindlichem Gehäuse durch einen Feststoffisolator isoliert. Je nach Ausführungsform der Trockensteckverbindung schmiegt sich an den Feststoffisolator und/oder den Kontaktanschluss ein Hochspannungsisolator aus einem duktilen, Isolationsmaterial wie etwa Silikon an. Mit anderen Worten ausgedrückt wird mittels im Adapterabschnitt beziehungsweise im Anschlussbereich der Steckverbindung eingefügter Dichtungen die erforderliche Gasdichtheit der Verbindung zwischen der Hochspannungsmesseinheit und dem Anschlussmodul gewährleistet. Beim Kuppelvorgang verdrängt das duktile Isolationsmaterial die Umgebungsluft weitestgehend aus der Steckkupplung.

Das Bauvolumen und/oder das Gasvolumen der Hochspannungsmessungseinheit lassen sich weiter reduzieren, wenn die Trockensteckkontaktkupplung einen zumindest teilweise integrierten elektrischen Isolator umfasst.

### KURZE BESCHREIBUNG DER ZEICHNUNG

In der Zeichnung sind Ausführungsbeispiel der Erfindung rein schematisch dargestellt. Dabei zeigt:
- Fig. 1: einen Längsschnitt durch eine erste Ausführungsform einer Hochspannungsmessungseinheit für drei Phasen, deren Primärphasenanschlüsse über eine Trockensteckkontaktkupplung mit einem benachbarten Modul elektrisch verbindbar sind;
- Fig. 2: einen vereinfacht dargestellten Gehäusequerschnitt der ersten Ausführungsform entlang der Schnittebene II-II in Figur 1;
- Fig. 3: einen vereinfacht dargestellten Gehäusequerschnitt einer zweiten Ausführungsform in der Darstellung analog zur Figur 2;
- Fig. 4: einen vereinfacht dargestellten Gehäusequerschnitt einer dritten Ausführungsform in der Darstellung analog zur Figur 2;
- Fig. 5: einen vereinfacht dargestellten Gehäusequerschnitt einer vierten, in der unteren Figur- hälfte dargestellten Ausführungsform in der Darstellung analog zur Figur 2; und
- Fig. 6: eine fünfte Ausführungsform einer Hochspannungsmessungseinheit für drei Phasen mit einer alternativen Ausführungsform der Trockensteckkontaktkupplung.

### WEGE ZUR AUSFÜHRUNG DER ERFINDUNG

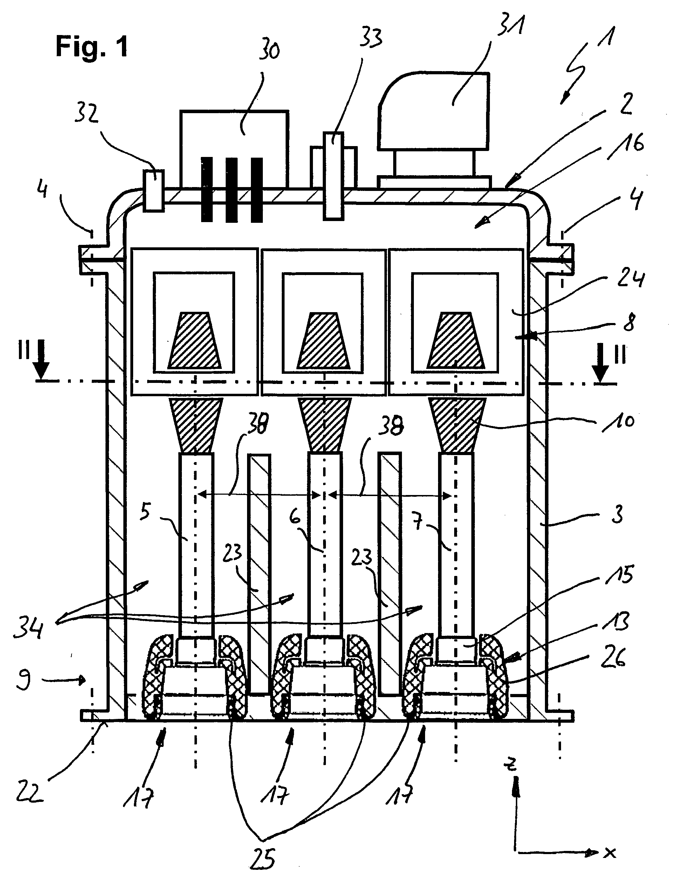

Der Längsschnitt durch eine erste Ausführungsform zweier dreiphasig gekapselter HV-GIS-Module in entkuppeltem Zustand von **Figur 1** zeigt eine gasisolierte Hochspannungsmesseinheit 1, welche mit einem nicht dargestellten benachbarten Modul, nachstehend auch zweiter Modul genannt, verbindbar ist. Die Hochspannungsmesseinheit ist als Spannungswandler ausgebildet, während der benachbarte Modul, beispielsweise einen Verbindungsmodul in einem gasisolierten Schaltfeld darstellt. Die Hochspannungsmessungseinheit 1 verfügt über ein einteiliges, hülsenartiges Gehäuse 3, welches stirnseitig über eine stilisiert dargestellte Verschraubung 4 mit einem Deckel 2 gasdicht verschliessbar beziehungsweise verschlossen ist. Da die Form des Deckels in der vorliegenden Beschreibung lediglich eine untergeordnete Rolle spielt, wird unter dem Begriff ,Gehäuse' nachfolgend meist die gesamte, einen gemeinsamen Gasraum beschränkende Gehäusestruktur mit Gehäuse 3 samt Deckel 2 verstanden. Auf den Deckel 2 wird später noch gesondert eingegangen werden. Das Gehäuse 3 umfasst drei Nominalleiteranschlüsse 5, 6, 7, auch Phasenleiter oder Primärphasenanschlüsse genannt, welche mit entsprechenden Messeinheiten 8 in Form von Messwandlern verbunden sind. Die sich in Z-Richtung erstreckenden Phasenleiter 5, 6, 7 der Hochspannungsmessungseinheit sind mit entsprechenden Phasenleitern unterschiedlichen Potentials des zweiten Moduls über jeweils eine Steckverbindung 9 pro Phase elektrisch miteinander verbindbar. Die elektrische Verbindung der Phasenleiter 5, 6, 7 der Hochspannungsmesseinheit mit den Phasenleitern des zweiten Moduls 2 erfolgt dabei ausschliesslich über die Steckverbindungen 9. Bei der in Figur 1 gezeigten Ausführungsform der Hochspannungsmesseinheit 1 weisen die Primärphasenanschlüsse 5, 6, 7 der Hochspannungsmesseinheit endseitig je ein Buchsenelement 13 auf. Dementsprechend sind die Primärphasenanschlüsse des Anschlussmoduls endseitig als komplementären Teil der jeweiligen Steckverbindungen 9 als männliche Teile der Steckverbindungen 9 geformt. Wenn die Primärphasenanschlüsse des Anschlussmoduls ebenfalls als Buchsenelemente ausgeführt sind, ist eine elektrische Kontaktierung zweier entsprechender Buchsenelemente beispielsweise über einen die beiden verbindenden Kontaktstift / Kontaktanschluss realisierbar.

In einer Basisvariante ist ein isolierender Abschnitt des Buchsenelementes 13 aus Giessharz gefertigt, während eine leitende, metallische Steckerbuchse 15 als Nominalleiteranschluss des Buchsenelements 13 dient. Je nach Anforderungen sind anstelle des Giessharzes andere, geeignete Materialen jedoch dafür einsetzbar. Die elektrische Verbindung der Steckverbindungen 9 erfolgt über die Steckerbuchse 15 und den ebenfalls metallischen Kontaktanschluss.

Das Gehäuse 3 begrenzt einen Gasraum 16, welcher pro Primärphasenanschluss jeweils in einer gehäuseseitigen Anschlussöffnung 17 mündet, die den jeweiligen Primärphasenanschluss 5, 6, 7 umgreift und in einem flanschartigen Adapterabschnitt 19 mündet.

Je nach Ausführung des Anschlussmoduls, ist der flanschartige Adapterabschnitte 19 beispielsweise über eine stilisiert dargestellte Schraubverbindung 20 mechanisch miteinander verbindbar.

Die flanschseitige Abdichtung des Gasraumes 16 erfolgt über Isolationsabschnitte der Buchsenelemente 13, welche im Betrieb gleichzeitig die elektrische Isolation des Primärphasenanschlusses gegen Masse - sprich dem Gehäuse 3 - gewährleisten. Ein mehrteilig ausgeführter Isolationskörper 25 umfasst entsprechend drei Isolationsabschnitte der Buchsenelemente 13. Diese drei Isolationsabschnitte sind jeweils als becherförmige Isolationselemente 26 realisiert.

Aus Figur 1 geht weiter hervor, dass die Buchsenelemente 13 alle innerhalb einer sich in einer ersten Ebene 22 erstreckenden Konturlinie angeordnet sind. Diese erste Ebene 22 bietet sich als Abstellfläche zum Zwischenlagern der Hochspannungsmesseinheit, etwa während der Montage, bestens an. Zudem sind bei dieser Variante die Primärleiteranschlüsse, beziehungsweise Steckkontaktteile verhältnismässig gut gegen äussere Störeinflüsse wie Schläge und dergleichen geschützt.

Das Gehäuse 3 weist zur Befestigung mit dem Deckel in einem dem flanschartigen Adapterabschnitt abgewandten Ende ebenfalls einen Flanschanschluss auf, welcher beispielsweise mit Durchgangslöchern oder Innengewinden zur Etablierung der Verschraubung 4 mit dem Deckel 2 auf. Am Deckel 2 sind alle Sekundärseitigen Schnittstellen der Spannungsmessung, nachfolgend vereinfachend als Messabgriff 30 bezeichnet, angeordnet. Vom Messabgriff 30 sind Daten/Signale für eine Auswerteeinheit entnehmbar. Weiter umfasst der Deckel 2 sämtliche Einheiten, welche im Zusammenhang mit dem Isoliergas benötigt werden, beispielsweise einen Berstschutz 31 mit einer Berstscheibeneinrichtung sowie einen Dichtheitswächter 32, beispielsweise in Form eines Drucksensors und einen Befüll- und Entleerstutzen 33.

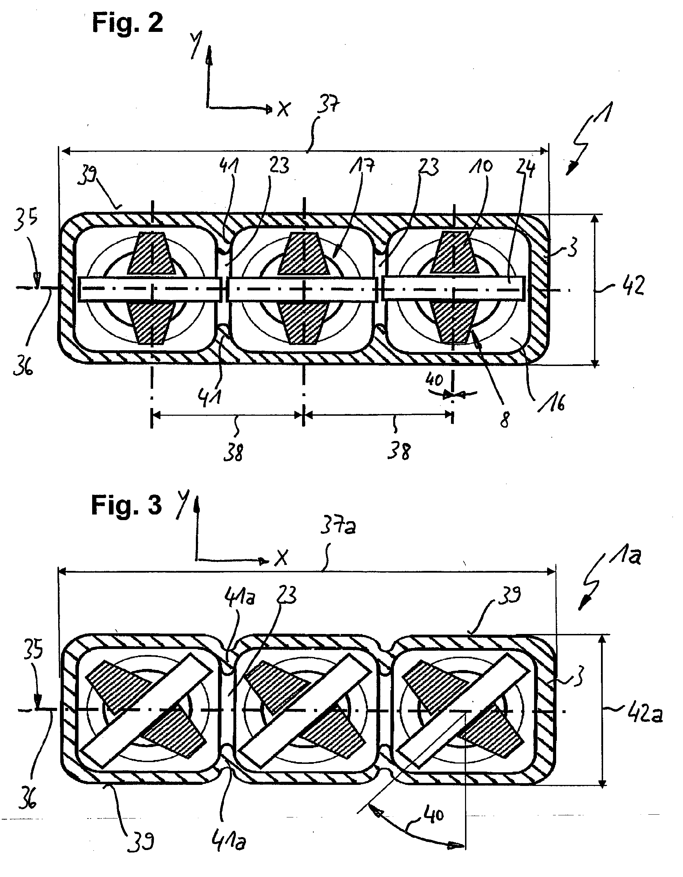

In Zusammenschau mit **Figur 2** wird die in Figur 1 gezeigte Gehäuseform der Hochspannungsmesseinheit besser ersichtlich. Der in Figur 2 vereinfacht dargestellte Gehäusequerschnitt der ersten Ausführungsform entlang der Schnittebene II-II in Figur 1 verläuft in Richtung der XY-Ebene beziehungsweise XY-Richtung.

Der gemeinsame Gasraum 16 der Hochspannungsmesseinheit 1 ist gegen den flanschartigen Adapterabschnitt 19 hin durch erste Gehäuserippen 23 wie drei einphasig gekapselte Primärphasenanschlüsse gestaltet, wobei die dadurch entstandenen Teilräume 34 des Gasraums 16 auf einer dem flanschartigen Adapterabschnitt 19 abgewandten Ende der Hochspannungsmesseinheit 1 hydraulisch in einen einzigen Gasraum 16 münden. Die Gehäuserippen 23 sind in einem Gehäuseabschnitt 14 des primärseitigen Anschlussbereichs zwischen den Primärphasenanschlüssen angeordnet.

In Figur 2 sind die drei Messeinheiten beziehungsweise Messwandler 8 mit ihren jeweiligen Wicklungen 10 und Eisenkernen 24 gezeigt, wobei die Eisenkerne 24 nicht geschnitten dargestellt sind.

Aus der Schnittansicht von Figur 2 geht in Zusammenschau mit Figur 1 weiter hervor, dass die Achsen der drei Primäranschlüsse in einer zweiten Ebene 35 angeordnet sind. Da sich die in X Y-Richtung beziehungsweise XY-Ebene erstreckende erste Ebene 22 rechtwinklig zur in XZ-Richtung erstreckenden, zweiten Ebene 35 erstreckt, entsteht eine sich in X-Richtung erstreckende Schnittgerade. In der Folge liegen die jeweiligen Mitten der Anschlussöffnungen 17 auf einer gemeinsamen, ersten Geraden 36 in einem regelmässigen Abstand 38 voneinander entfernt angeordnet. Der regelmässige Abstand 38 ist nicht zuletzt ein wesentliches Merkmal für die modulare, vielseitige Einsetzbarkeit der Hochspannungsmessungseinheit 1, welche zumindest teilweise für die Kompaktheit von Schaltfeldern mitverantwortlich ist.

In der in Figur 2 gezeigten Anordnung der Wicklungen 10 und Eisenkerne 24 mit einem Neigungswinkel 40 von Null Grad resultiert eine sich in X-Richtung erstreckende Gehäuselänge 37, deren Querschnitt sich in der XY-Ebene erstreckt.

Das Gehäuse 3 weist pro sich in X-Richtung erstreckende Gehäuseflanke 39 je zwei dem Absolutdruck entgegenwirkende Strukturelemente in Form von Versteifungsrippen 41 auf, welche in X-Richtung in etwa mittig zwischen zwei benachbarten Messeinheiten 8 angeordnet sind. Ein sich in Richtung der Primäranschlüsse erstreckendes Strukturelement in Form von Versteifungsrippen 41 ragt derart ins Innere des Gehäuses 3, also den Gasraum 16 hinein, dass eine äussere Querschnittskontur des Gehäuses davon unbeeinflusst bleibt.

In der **Figur 3** ist eine zweite Ausführungsform der Hochspannungsmesseinheit ähnlich der ersten Ausführungsform von Figur 1 und 2 analog dem Schnitt entlang der Schnittlinie II-II gezeigt. Aufgrund dieser Ähnlichkeit wird nachfolgend nur auf die Unterschiede zur Figur 2 eingegangen. Gleiche oder gleich wirkende Elemente sind mit denselben Bezugszeichen versehen.

Anders als bei der ersten Ausführungsform der Hochspannungsmesseinheit ist die dem Absolutdruck entgegenwirkende Struktur in Form von Versteifungsrippen 41a der zweiten Ausführungsform der Hochspannungsmesseinheit 1a durch jeweils eine lokale Einbuchtung des Gehäuses 3 beziehungsweise der Gehäusewand gebildet. Durch einen vergrösserten Neigungswinkel 40 von Wicklungen 10 und Eisenkernen 24 resultiert eine sich in X-Richtung erstreckende Gehäuselänge 37a, welche bei denselben Randbedingungen wie bei der ersten Ausführungsform der Hochspannungsmesseinheit leicht kürzer ist, als dessen Gehäuselänge 37. Analoges gilt für eine sich in Y-Richtung erstreckende Gehäusebreite 42a, welche kürzer als die Gehäusebreite 42 der ersten Ausführungsform der Hochspannungsmesseinheit ist. Diese Massnahme ermöglicht eine Verringerung des Volumens des Gasraums 16 gegenüber der ersten Ausführungsform.

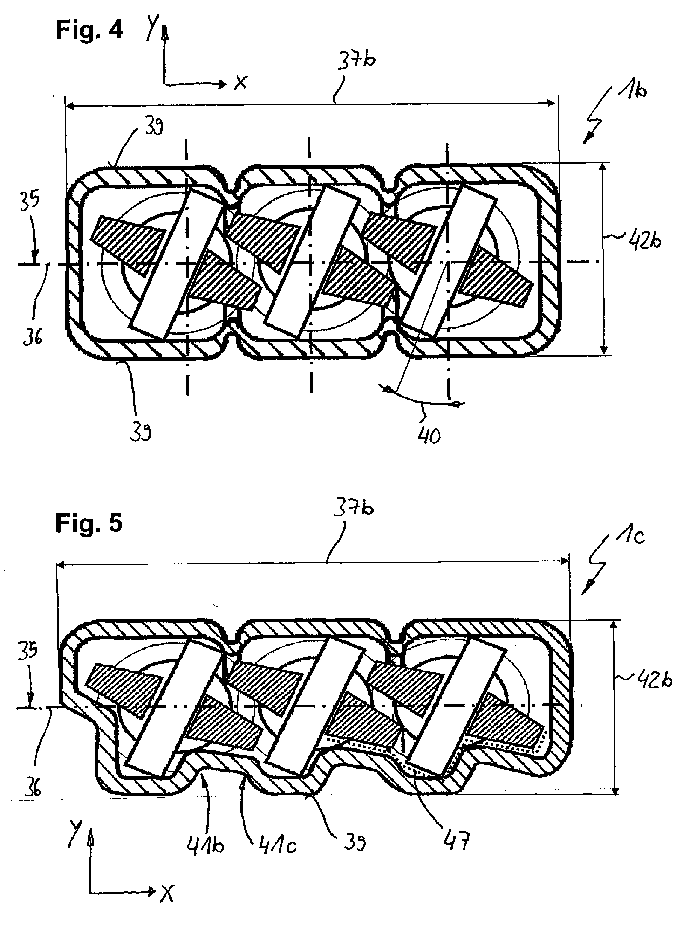

In der **Figur 4** ist eine dritte Ausführungsform der Hochspannungsmesseinheit 1b ähnlich der zweiten Ausführungsform von Figur 3 gezeigt. Aufgrund dieser Ähnlichkeit wird nachfolgend nur auf die Unterschiede zur Figur 3 eingegangen. Gleiche oder gleich wirkende Elemente sind wiederum mit denselben Bezugszeichen versehen.

Im Unterschied zur zweiten Ausführungsform sind die Wicklungen 10 und Eisenkerne 24 nicht nur um den Neigungswinkel 40 gedreht, sondern in X-Richtung zudem formmässig ineinander verzahnt angeordnet. Diese Massnahme ermöglicht im Vergleich zur Gehäuselänge 37a derart zu verringern, dass eine Gehäuselänge 37b resultiert. Diese Massnahme ermöglicht eine weitere Verringerung des Volumens des Gasraums 16 gegenüber der ersten Ausführungsform.

Die in der **Figur 5** gezeigte, vierte Ausführungsform der Hochspannungsmesseinheit 1c hat bezüglich der zweiten Ebene 35 auf der in Richtung der Figur 4 gelegenen Hälfte des Querschnitts (also der ,oberen Hälfte') eigentlich nicht genau den in Figur 4 gezeigten Querschnitt, sondern einen Querschnitt entsprechend der der Figur 4 abgewandten Hälfte des Querschnitts (also der ,unteren Hälfte' des Querschnitts). Anders ausgedrückt entspricht die obere Hälfte daher der dritten Ausführungsform, während nur die untere Hälfte tatsächlich eine Hälfte der vierten Ausführungsform grafisch wiedergibt. Aufgrund dieser Ähnlichkeit der vierten Ausführungsform zur dritten Ausführungsform der Hochspannungsmesseinheit wird nachfolgend nur auf die Unterschiede zur Figur 3 eingegangen. Gleiche oder gleich wirkende Elemente sind wiederum mit denselben Bezugszeichen versehen.

Aus der unteren Hälfte des in Figur 5 gezeigten Querschnittes geht hervor, dass der Gehäusequerschnitt in der XY-Ebene im Wesentlichen einer gemeinsamen Umhüllenden 47 aller Messeinheiten 8 folgt. Diese Massnahme ermöglicht eine zusätzliche Verringerung des Volumens des Gasraums 16 gegenüber der dritten Ausführungsform. Wenn die Gehäuseflanken 39 auch in Z-Richtung, also in Richtung der gemeinsamen Umhüllenden 47 der Messeinheiten 8 und allenfalls der Primäranschlüsse folgen, ist eine weitere Verringerung des Volumens des Gasraums 16 erreichbar. In der Figur 5 ist die Umhüllende 47 zugunsten der Übersichtlichkeit der Figur lediglich partiell als gepunktete Linie dargestellt.

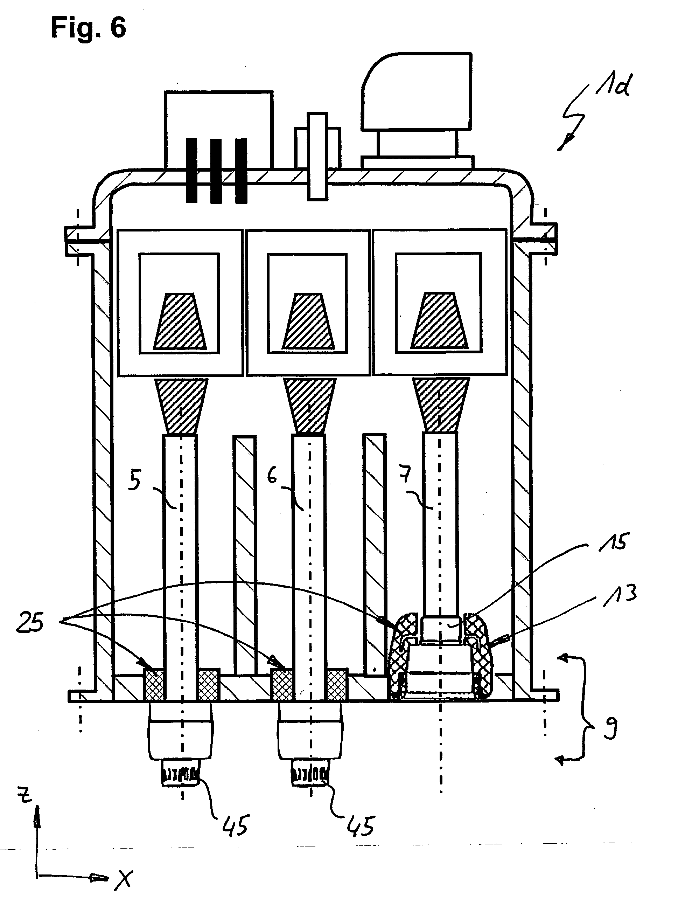

In der **Figur 6** ist eine weitere Ausführungsform der Hochspannungsmesseinheit 1d ähnlich der ersten Ausführungsform ähnlich der Darstellung von Figur 1 gezeigt. Aufgrund dieser Ähnlichkeit wird nachfolgend nur auf die Unterschiede zur Figur 1 eingegangen. Gleiche oder gleich wirkende Elemente sind wiederum mit denselben Bezugszeichen versehen.

Anders als bei der ersten Ausführungsform der Hochspannungsmesseinheit weist diese Ausführungsform der Hochspannungsmesseinheit 1d sowohl weibliche, als auch männliche Kontakteile der Steckverbindung 9 auf. Die dadurch erzielte Codierung erlaubt bei der Montage der Hochspannungsmesseinheit 1d am benachbarten Modul eine zweifelsfreie Einbaulage. Dadurch können potentielle Fehler von verwechselten Phasen 5, 7, beispielsweise verwechselte R und T-Phasen zum Vornherein sicher ausgeschlossen werden.

Wie aus den in Figur 6 gezeigten Positionen der Steckverbindung 9 hervorgeht, weisen der Primärphasenanschluss links (5) und in der Mitte (6) jeweils einen stiftförmigen Kontaktanschluss 45 auf, während nur der Primärphasenanschluss rechts (7) ein Buchsenelement 13 aufweist. Sowohl der stiftförmigen Kontaktanschluss 45, als auch das Buchsenelement 13 bilden Teile der lösbaren Steckverbindung 9.

Es versteht sich von selbst, dass die unterschiedlich geformten Elemente 13, 45 unterschiedliche Isolatoren zur elektrischen Isolation der Primärteile gegen Masse (Gehäuse) erfordern. Der mehrteilig ausgeführte Isolationskörper 25 umfasst beim Primärphasenanschluss 7 rechts ein becherförmiges Isolationselement 26, während die stiftförmigen Kontaktanschlüsse 45 des linken und mittleren Primärphasenanschlusses 5, 6 in einer Basisausführungsform beispielsweise lediglich eine Isolationshülse 46 aufweisen. Sowohl das becherförmige Isolationselement 26, als auch die Isolationshülse 46 bilden gasdichte, feste Verbindungen des elektrischen Isolators zum Gehäuse 3 im Bereich des flanschartigen Adapterabschnittes 19. Anders ausgedrückt, bilden die Isolationshülsen 46 und das becherförmige Isolationselement 26 gemeinsam den Isolationskörper 25 der Hochspannungsmesseinheit 1a.

Als Alternative zu einer Ausführungsform der Hochspannungsmesseinheit als Hochspannungswandler zum Messen einer Hochspannung kann eine weitere Ausführungsform der Hochspannungsmesseinheit mindestens einen kapazitiven Spannungsteiler aufweisen.

### BEZUGSZEICHENLISTE

- 1, 1a, 1b, 1c, 1d: Hochspannungsmesseinheit
- 2: Deckel
- 3: Gehäuse der Hochspannungsmesseinheit
- 4: Verschraubung
- 5,6,7: Primärphasenanschluss
- 8: Messeinheit, Messwandler
- 9: Steckverbindung
- 10: Wicklung
- 13: Buchsenelement, buchsenförm. Gegenkontakt
- 14: Abschnitt der Hochspannungsmesseinheit
- 15: Steckerbuchse
- 16: Gasraum
- 17: Gehäuseseitige Anschlussöffnungen
- 19: Flanschartiger Adapterabschnitt
- 20: Schraubverbindung
- 22: Erste Ebene
- 23: Erste Gehäuserippe
- 24: Eisenkern
- 25: Isolationskörper, Isolierkörper
- 26: Becherförmiges Isolationselement
- 30: Messabgriff
- 31: Berstschutz
- 32: Dichtheitswächter
- 33: Befüll- und Entleerstutzen
- 34: Teilraum des Gasraums
- 35: Zweite Ebene
- 36: Erste Gerade
- 37,37a,37b,37c: Gehäuselänge
- 38: Abstand
- 39: Gehäuseflanke
- 40: Neigungswinkel
- 41,41a,41b,41c: Versteifungsrippe, zweite Gehäuserippe
- 42,42a,42b: Gehäusebreite
- 45: Stiftförmiger Kontaktanschluss
- 46: Isolationshülse
- 47: Umhüllende

## Patentansprüche

1. Gasisolierte Hochspannungsmessungseinheit (1,1a,1b,1c, 1d), mit mindestens zwei parallel zueinander verlaufend angeordneten Primärphasenanschlüssen (5,6,7) und mindestens einer damit verbundenen Messeinheit (8) zum Messen einer Primärspannung der Primärphasenanschlüsse (5, 6, 7), wobei die Primärphasenanschlüsse (5,6,7) und die Messeinheiten in einem gekapselten Gehäuse (3) der Hochspannungsmessungseinheit angeordnet sind, wobei die mindestens zwei Primärphasenanschlüsse (5,6,7) derart in einer zweiten Ebene (35) angeordnet sind, dass das Gehäuse (3) in einer senkrecht zur zweiten Ebene (35) verlaufenden Schnittebene (II-II) einen langgezogenen Gehäusequerschnitt aufweist, dessen Gehäuselänge (37,37a,37b) grösser als dessen Gehäusebreite (42,42a,42b) ist, wobei die Primärphasenanschlüsse (5,6,7) und die Messeinheiten (8) in einem Gasraum (16) des Gehäuses (3) gemeinsam gekapselt angeordnet sind, und wobei das Gehäuse (3) zwei sich in Richtung der Gehäuselänge (37,37a, 37b) erstreckende, einander gegenüberliegend angeordnete Gehäuseflanken (39) aufweist, **dadurch gekennzeichnet, dass** mindestens eine der Gehäuseflanken (39) mindestens eine dem Absolutdruck entgegenwirkende Struktur (41,41a,41b,41c) mit mindestens einem sich in Richtung (Z) der Primäranschlüsse (5,6,7) erstreckenden Strukturelement aufweist, wobei dass das Strukturelement eine Rippe (41,41a) und/oder eine lokale Einbuchtung des Gehäuses (3) umfasst.

2. Hochspannungsmessungseinheit nach Anspruch 1, **dadurch**
**gekennzeichnet, dass** das Gehäuse in einem primärseitigen Anschlus-sbereich der Hochspannungsmessungseinheit
gasdicht verschlossen ist und das den Gasraum umgebende Gehäuse (3) als Druckbehälter für einen Betrieb der Hochspannungsmessungseinheit bei einem Nominaldruck des Isoliergases von mindestens 250000 Pascal ausgelegt ist.

3. Hochspannungsmessungseinheit nach Anspruch 1 oder 2, **dadurch gekennzeichnet, dass** die mindestens eine Struktur (41,41a,41b,41c) ins Innere des Gehäuses (3) hineinragt.

4. Hochspannungsmessungseinheit nach einem der Ansprüche 1 bis 3, **dadurch gekennzeichnet, dass** das Gehäuse (3) in mindestens einem Abschnitt (14) des primärseitigen Anschlussbereichs zwischen den Primärphasenanschlüssen verrippt ist.

5. Hochspannungsmessungseinheit nach Anspruch 4, **dadurch gekennzeichnet, dass** die beiden Gehäuseflanken (39) in mindestens einem Abschnitt (14) des primärseitigen Anschlussbereichs über mindestens eine erste Gehäuserippe (23) miteinander verbunden sind.

6. Hochspannungsmessungseinheit nach einem der Ansprüche 1 bis 5, **dadurch gekennzeichnet, dass** die Primärphasenanschlüsse (5,6,7) und/oder die Messeinheiten (8) zumindest in Richtung der Gehäuselänge (37,37a,37b) formmässig ineinander verzahnt angeordnet sind.

7. Hochspannungsmessungseinheit nach einem der Ansprüche 1 bis 6, **dadurch gekennzeichnet, dass** der Gehäusequerschnitt in Richtung der Gehäuselänge (37,37a,37b) und/oder in Richtung der Primärphasenanschlüsse (5,6,7) zumindest abschnittweise einer gemeinsamen Umhüllenden (47) der Messeinheiten (8) und/oder der Primärphasenanschlüsse (5,6,7) folgt.

8. Hochspannungsmessungseinheit nach einem der Ansprüche 1 bis 7, **dadurch gekennzeichnet, dass** zumindest einer der Primäranschlüsse (5,6,7) im primärseitigen Anschlussbereich über eine Trockensteckkontaktkupplung (9) mit einem Anschlussmodul verbindbar ist.

9. Hochspannungsmessungseinheit nach Anspruch 8, **dadurch gekennzeichnet, dass** die Trockensteckkontaktkupplung (9) einen zumindest teilweise integrierten elektrischen Isolator (26, 46) umfasst.

10. Hochspannungsmessungseinheit nach einem der Ansprüche 1 bis 9, **dadurch gekennzeichnet, dass** drei Primärphasenanschlüsse (5,6,7) in der zweiten Ebene (35) angeordnet sind.

11. Gasisolierte Schaltanlage mit mindestens einer Hochspannungsmessungseinheit (1,1a,1b,1c,1d) nach einem der Ansprüche 1 bis 10.

## Claims

1. Gas-insulated high-voltage measurement unit (1, 1a, 1b, 1c, 1d) having at least two primary phase connections (5, 6, 7) which are arranged such that they run parallel to one another, and at least one measurement unit (8), which is connected thereto, for measurement of a primary voltage of the primary phase connections (5, 6, 7), wherein the primary phase connections (5, 6, 7) and the measurement units are arranged in an encapsulated housing (3) of the high-voltage measurement unit, wherein the at least two primary phase connections (5, 6, 7) are arranged on a second plane (35) such that the housing (3) has an elongated housing cross section on a section plane (II-II) which runs at right angles to the second plane (35), the housing length (37, 37a, 37b) of which housing (3) is greater than its housing width (42, 42a, 42b), wherein the primary phase connections (5, 6, 7) and the measurement units (8) are arranged jointly encapsulated in a gas area (16) of the housing (3), and wherein the housing (3) has two housing flanks (39), which extend in the direction of the housing length (37, 37a, 37b) and are arranged opposite one another, **characterized in that** at least one of the housing flanks (39) has at least one structure (41, 41a, 41b, 41c) which withstands the absolute pressure with at least one structure element which extends in the direction (Z) of the primary connections (5, 6, 7), wherein the structure element comprises a rib (41, 41a) and/or a local indentation in the housing (3).

2. High-voltage measurement unit according to Claim 1, **characterized in that** the housing is closed in a gas-tight manner in a primary-side connecting area of the high-voltage measurement unit, and the housing (3) which surrounds the gas area is designed as a pressure vessel for operation of the high-voltage measurement unit at a nominal pressure of the insulating gas of at least 250,000 Pascals.

3. High-voltage measurement unit according to Claim 1 or 2, **characterized in that** the at least one structure (41, 41a, 41b, 41c) projects into the interior of the housing (3).

4. High-voltage measurement unit according to one of Claims 1 to 3, **characterized in that** the housing (3) is ribbed in at least one section (14) of the primary-side connecting area between the primary phase connections.

5. High-voltage measurement unit according to Claim 4, **characterized in that** the two housing flanks (39) are connected to one another in at least one section (14) of the primary-side connecting area via at least one first housing rib (23).

6. High-voltage measurement unit according to one of Claims 1 to 5, **characterized in that** the primary phase connections (5, 6, 7) and/or the measurement units (8) are arranged with their shapes meshing in one another, at least in the direction of the housing length (37, 37a, 37b).

7. High-voltage measurement unit according to one of Claims 1 to 6, **characterized in that**, at least in places, the housing cross section in the direction of the housing length (37, 37a, 37b) and/or in the direction of the primary phase connections (5, 6, 7) follows a common envelope (47) of the measurement units (8) and/or of the primary phase connections (5, 6, 7).

8. High-voltage measurement unit according to one of Claims 1 to 7, **characterized in that** at least one of the primary connections (5, 6, 7) in the primary-side connecting area can be connected to a connecting module via a dry plug contact coupling (9).

9. High-voltage measurement unit according to Claim 8, **characterized in that** the dry plug contact coupling (9) comprises an at least partially integrated electrical isolator (26, 46).

10. High-voltage measurement unit according to one of Claims 1 to 9, **characterized in that** three primary phase connections (5, 6, 7) are arranged on the second plane (35).

11. Gas-insulated switchgear assembly having at least one high-voltage measurement unit (1, 1a, 1b, 1c, 1d) according to one of Claims 1 to 10.

## Revendications

1. Unité de mesure de haute tension à isolation gazeuse (1, 1a, 1b, 1c, 1d), comprenant au moins deux bornes de phase primaires (5, 6, 7) disposées de manière à s'étendre parallèlement l'une à l'autre et au moins une unité de mesure (8) reliée avec celles-ci pour mesurer une tension primaire des bornes de phase primaires (5, 6, 7), les bornes de phase primaires (5, 6, 7) et les unités de mesure étant disposées dans un boîtier blindé (3) de l'unité de mesure de haute tension, les au moins deux bornes de phase primaires (5, 6, 7) étant disposées dans un deuxième plan (35) de telle sorte que le boîtier (3) présente, dans un plan de coupe (II-II) qui s'étend perpendiculairement au deuxième plan (35), une section transversale de boîtier étirée en longueur dont la longueur de boîtier (37, 37a, 37b) est supérieure à sa largeur de boîtier (42, 42a, 42b), les bornes de phase primaires (5, 6, 7) et les unités de mesure (8) étant disposées en étant blindées ensemble dans un espace à gaz (16) du boîtier (3), et le boîtier (3) présentant deux flancs de boîtier (39) opposés l'un à l'autre et s'étendant dans le sens de la longueur de boîtier (37, 37a, 37b), **caractérisée en ce qu'**au moins l'un des flancs de boîtier (39) présente au moins un structure (41, 41a, 41b, 41c) s'opposant à la pression absolue avec aux moins un élément de structure qui s'étend dans la direction (Z) des bornes primaires (5, 6, 7), l'élément de structure présentant une nervure (41, 41a) et/ou une rainure locale du boîtier (3).

2. Unité de mesure de haute tension selon la revendication 1, **caractérisée en ce que** le boîtier est fermé hermétiquement au gaz dans une zone de raccordement côté primaire de l'unité de mesure de haute tension et le boîtier (3) qui entoure l'espace à gaz est conçu sous la forme d'un récipient à pression pour un fonctionnement de l'unité de mesure de haute tension à une pression nominale du gaz isolant d'au moins 250 000 pascals.

3. Unité de mesure de haute tension selon la revendication 1 ou 2, **caractérisée en ce que** l'au moins un structure (41, 41a, 41b, 41c) fait saillie à l'intérieur du boîtier (3).

4. Unité de mesure de haute tension selon l'une des revendications 1 à 3, **caractérisée en ce que** le boîtier (3) est nervuré entre les bornes de phase primaires dans au moins une portion (14) de la zone de raccordement côté primaire.

5. Unité de mesure de haute tension selon la revendication 4, **caractérisée en ce que** les deux flancs de boîtier (39) sont reliés entre eux par le biais d'au moins une première nervure de boîtier (23) dans au moins une portion (14) de la zone de raccordement côté primaire.

6. Unité de mesure de haute tension selon l'une des revendications 1 à 5, **caractérisée en ce que** les bornes de phase primaires (5, 6, 7) et/ou les unités de mesure (8) sont disposées en étant engrenées géométriquement les unes dans les autres au moins dans le sens de la longueur de boîtier (37, 37a, 37b).

7. Unité de mesure de haute tension selon l'une des revendications 1 à 6, **caractérisée en ce que** la section transversale de boîtier en direction de la longueur de boîtier (37, 37a, 37b) et/ou en direction des bornes de phase primaires (5, 6, 7) suit au moins dans une certaine portion un enveloppement (47) commun des unités de mesure (8) et/ou des bornes de phase primaires (5, 6, 7).

8. Unité de mesure de haute tension selon l'une des revendications 1 à 7, **caractérisée en ce qu'**au moins l'une des bornes primaires (5, 6, 7) peut être reliée avec un module de raccordement par le biais d'un coupleur à contact sec (9) dans la zone de raccordement côté primaire.

9. Unité de mesure de haute tension selon la revendication 8, **caractérisée en ce que** le coupleur à contact sec (9) comprend un isolateur électrique (26, 46) au moins partiellement intégré.

10. Unité de mesure de haute tension selon l'une des revendications 1 à 9, **caractérisée en ce que** trois bornes de phase primaires (5, 6, 7) sont disposées dans le deuxième plan (35).

11. Équipement de commutation à isolement gazeux comprenant au moins une unité de mesure de haute tension (1, 1a, 1b, 1c, 1d) selon l'une des revendications 1 à 10.
